# EUROPEAN PATENT APPLICATION

(11) **EP 2 177 386 A1**
(43) Date of publication of application: **21.04.2010**
(21) Application number: 08425665.0
(22) Date of filing: 15.10.2008
(51) Int. Cl.: B60K 6/547

(54) **Motor-drive transmission equipped with an electric motor**

(71) Applicant: Magneti Marelli Powertrain S.p.A., 28011 Corbetta (IT)
(72) Inventor: Medico, Giuseppe, 10098 Rivoli (IT); Raimondi, Marco, 41010 Piumazzo (IT); Amisano, Fabrizio, 10144 Torino (IT)
(74) Representative: Bergadano, Mirko

(57) **Abstract**

A motor-drive transmission (7) having: a mechanical gear change (10), which is provided with a primary shaft (18), which can be connected to the crankshaft (6) of a thermal internal-combustion engine (5), with a secondary shaft (19) connected to drive wheels (3), and with a plurality of gear pairs, each of which comprises a primary gear (20), mounted on the primary shaft (18), and a secondary gear (21), which is mounted on the secondary shaft (19) and permanently meshes with the primary gear (20); a clutch (8) for connecting the primary shaft (18) of the servo gear change (10) to the crankshaft (6) of the thermal internal-combustion engine (5); a transmission shaft (12), which is angularly fixed with respect to the secondary shaft (19) for connecting the secondary shaft (19) to the drive wheels (3); and an electric machine (15) provided with a hollow shaft (24) of its own, which can be connected to the secondary shaft (19), is hollow, has an empty central channel (25) inside, and is set coaxial to and around the transmission shaft (12) so as to house inside it the transmission shaft (12) itself.

## Description

### TECHNICAL FIELD

The present invention relates to a motor-drive transmission equipped with an electric motor.

### BACKGROUND ART

A hybrid vehicle comprises an internal-combustion engine, which transmits the torque to the drive wheels by means of a transmission provided with a gear change, and at least one electric machine electrically connected to an electrical-accumulation system and mechanically connected to the drive wheels.

When the vehicle is travelling, the following operating modes are possible: a thermal operating mode, in which the torque is generated only by the internal-combustion engine, and possibly the electric machine operates as generator for recharging the electrical-accumulation system; an electrical operating mode, in which the internal-combustion engine is turned off, and the torque is generated only by the electric machine operating as motor; or else a combined operating mode, in which the torque is generated both by the internal-combustion engine and by the electric machine operating as motor. In addition, in order to increase the total energy efficiency during all the deceleration phases, the electric machine can be used as generator for providing a regenerative deceleration, in which the kinetic energy possessed by the vehicle, instead of being completely dissipated in friction, is in part converted into electrical energy, which is stored in the electrical-accumulation system.

Housing of the electric motor inside the vehicle and, consequently, the mechanical connection of the electric motor to the drive wheels can prove very complex in an existing vehicle in so far as, in an existing vehicle that has not been specifically designed for hybrid drive, it is generally very difficult to find the space necessary to house the electric motor. Consequently, it is frequently impossible or in any case very costly to modify an existing vehicle in order to render it hybrid. Said limitation is particularly burdensome in so far as it does not enable production of a hybrid vehicle starting from an existing vehicle of a conventional type, but it requires a completely new design of the hybrid vehicle. Consequently, the costs of design and development of a hybrid vehicle are high, rendering hybrid vehicles far from convenient from the market standpoint.

### DISCLOSURE OF INVENTION

The aim of the present invention is to provide a motor-drive transmission equipped with an electric motor, said transmission being free from the drawbacks described above and being easy and economically advantageous to produce.

Provided according to the present invention is a motor-drive transmission equipped with an electric motor according to what is recited in the annexed claims.

### BRIEF DESCRIPTION OF THE DRAWINGS

The present invention will now be described with reference to the annexed drawings, which illustrate some non-limiting examples of embodiment thereof, and in which:
- Figure 1 is a schematic top plan view of an rear-drive automobile equipped with a transmission provided according to the present invention;
- Figure 2 is a schematic view with parts removed for reasons of clarity of a first embodiment of the transmission of Figure 1;
- Figure 3 is a schematic view with parts removed for reasons of clarity of a second embodiment of the transmission of Figure 1;
- Figure 4 is a schematic view with parts removed for reasons of clarity of a third embodiment of the transmission of Figure 1; and
- Figure 5 is a schematic view with parts removed for reasons of clarity of a fourth embodiment of the transmission of Figure 1.

### PREFERRED EMBODIMENT OF THE INVENTION

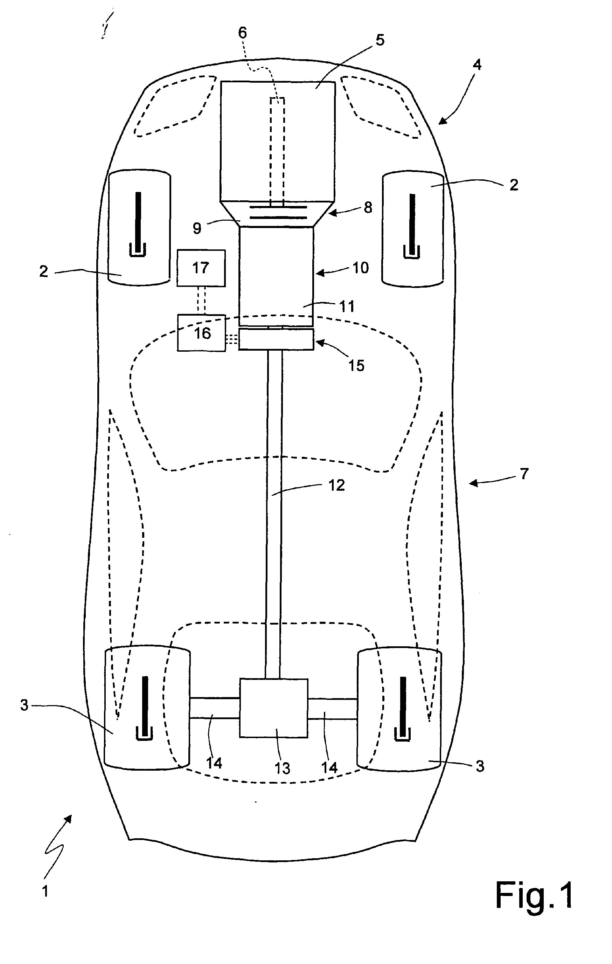

In Figure 1 designated as a whole by the number 1 is an automobile provided with two front wheels 2 and two rear drive wheels 3, which receive the torque from an engine system 4. The engine system 4 comprises a thermal internal-combustion engine 5, which is set in a longitudinal front position and is provided with a crankshaft 6, and a servo transmission 7, which transmits the torque generated by the thermal internal-combustion engine 5 to the rear drive wheels 3. The servo transmission 7 comprises a servo clutch 8 housed in a bell 9, fixed with respect to the thermal internal-combustion engine 5, a servo mechanical gear change 10, which is set in a front position and is housed in a gearbox 11 contiguous to the bell 9 of the clutch 8, and the transmission shaft 12, which connects the gear change 10 to a differential 13 from which there depart a pair of axle shafts 14, fixed with respect to the rear drive wheels 3. In addition, the servo transmission 7 comprises a reversible electric machine 15 (i.e., one which can function both as motor, absorbing electrical energy and generating mechanical work, and as generator, absorbing mechanical work and generating electrical energy), which is mechanically connected to the gear change 10 as will be better described hereinafter and is driven by an electrical drive 16 connected to at least one battery 17 designed to store electrical energy.

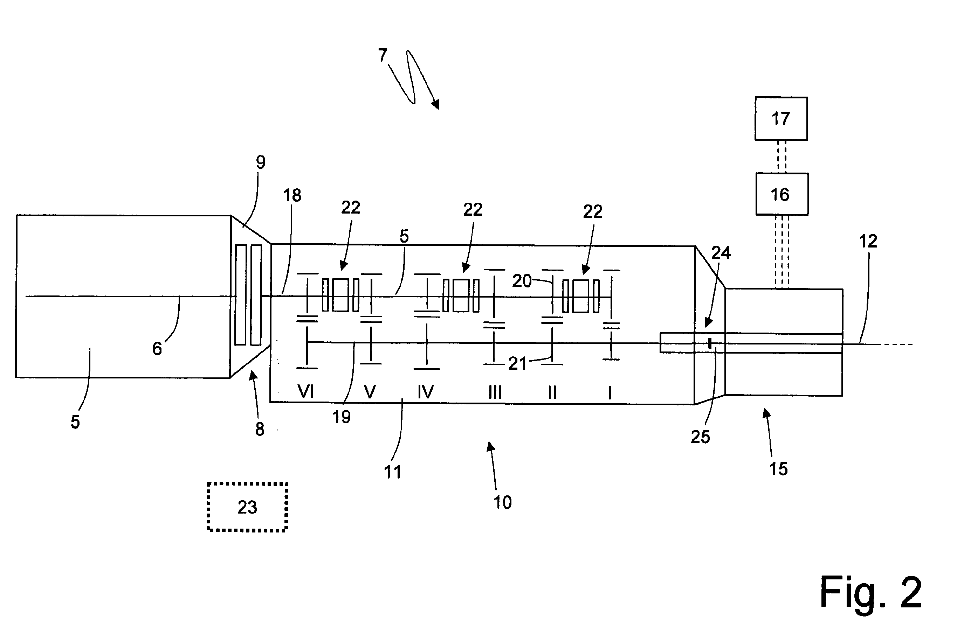

According to what is illustrated in Figure 2, the gear change 10 comprises a primary shaft 18, which turns at an angular velocity ω₁ and can be connected to the crankshaft 6 by means of the clutch 8, and a secondary shaft 19, which turns at an angular velocity ω₂ and is permanently connected to the transmission shaft 12. An input of the clutch 8 is directly connected to the crankshaft 6, whilst an output of the clutch 8 is connected to the primary shaft 18 of the servo gear change 10.

The servo gear change 10 (illustrated in Figure 1) comprises six forward gear speeds designated by Roman numerals (first gear I, second gear II, third gear III, fourth gear IV, fifth gear V, and sixth gear VI). The primary shaft 18 and the secondary shaft 19 are mechanically coupled to one another by means of a plurality of gear pairs, each of which defines a respective gear speed and comprises a primary gear 20 mounted on the primary shaft 18 and a secondary gear 21 mounted on the secondary shaft 19.

Each primary gear 20 is mounted idle on the primary shaft 18 and meshes always with the respective secondary gear 21. Instead, each secondary gear 21 is fitted on the secondary shaft 19 so as to rotate in a way fixed with respect to the secondary shaft 19. In addition, the gear change 10 comprises three synchronizers 22, each of which is mounted coaxial to the primary shaft 18, is set between two primary gears 11, and is designed to be actuated for engaging alternatively the two primary gears 11 to the primary shaft 18 (i.e., for rendering the two primary gears 11 alternatively angularly fixed with respect to the primary shaft 18). In other words, each synchronizer 22 can be displaced in one direction to engage a primary gear 20 to the primary shaft 18, or else can be displaced in the other direction to engage the other primary gear 20 to the primary shaft 18.

According to a different embodiment, not illustrated and perfectly equivalent to the embodiment described above, the primary gears 11 are fitted to the primary shaft 18, the secondary gears 12 are mounted idle on the secondary shaft 19, and the synchronizers 22 are mounted on the secondary shaft 19 for engaging the secondary gears 12 to the secondary shaft 19 itself.

The gear change 10 is actuated by a hydraulic servo for governing the synchronizers 22 so as to engage and disengage the gears. Also the clutch 8 is actuated by a hydraulic servo to connect and disconnect the crankshaft 6 to/from the primary shaft 18. The servo transmission 1 comprises an electronic control unit 23 (illustrated schematically), which governs the hydraulic servos of the gear change 10 and of the clutch 8.

The reversible electric machine 15 comprises a hollow shaft 24, which is fixed with respect to a rotor of the reversible electric machine 15 and is permanently connected to the secondary shaft 19 of the gear change 10 (i.e., the hollow shaft 24 always meshes with the secondary shaft 19). The hollow shaft 24 is hollow, i.e., it has inside an empty central channel 25 and is set coaxial to the transmission shaft 12, which is housed inside the hollow shaft 24, i.e., inside the central channel 25 of the hollow shaft 24 [?QUESTA FRASE ANDREBBE RIESPRESSA: RISULTA RIDONDANTE]. In other words, the transmission shaft 12 is set coaxial inside the hollow shaft 24 of the electric machine 15 in such a way that the transmission shaft 12 and the hollow shaft 24 will not have points of direct contact with one another (i.e., the outer diameter of the transmission shaft 12 is sufficiently smaller than the internal diameter of the central channel 25 of the hollow shaft 24).

With the architecture illustrated in Figure 2, it is possible to insert the electric machine 15 in the transmission 7 of the automobile 1 also in the case where the automobile 1 is not specifically designed for hybrid drive, i.e., in the case where in the design stage of the automobile 1 there has not been considered the possibility of housing also the electric machine 15. In fact, in the automobile 1, in which the thermal internal-combustion engine 5 is set in a front position with longitudinal orientation (i.e., with the crankshaft 6 parallel to the direction of advance of the automobile 1) and also the gear change 10 is set in a front position cascaded to the internal-combustion engine 5, there is a certain free space or in any case a space that can be easily rendered free around the transmission shaft 12 and in the proximity of the gear change 10 (i.e., in an area corresponding to the transmission tunnel). Positioned in this free space or in any case in this space that can be easily rendered free is the electric machine 15, which is hollow (i.e., its hollow shaft 24 has the central channel 25) for enabling passage of the transmission shaft 12. More in general, the mode of mechanical connection of the electric machine 15 described above is suitable for a vehicle with rear drive and front engine and gearbox (i.e., with internal-combustion engine and gear change at the front and rear differential).

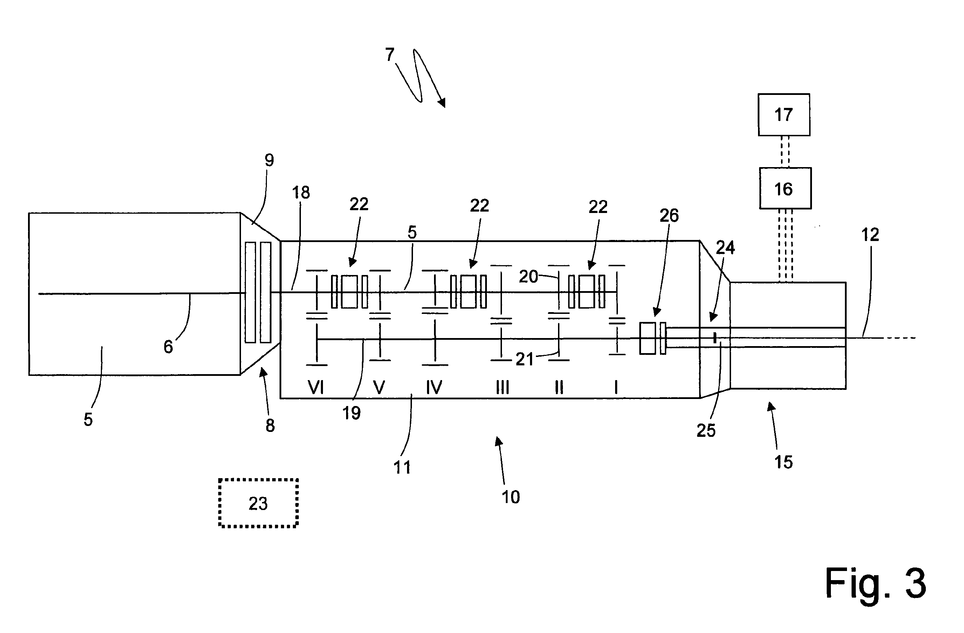

With the architecture illustrated in Figure 2, the hollow shaft 24 of the electric machine 15 is always angularly fixed with respect to the secondary shaft 19 of the gear change 10, and hence the electric machine 15 must be designed for working continuously at all possible r.p.m. of the secondary shaft 19. This mechanical constraint complicates the design of the electric machine 15 and above all increases the costs of production of the electric machine 15 itself. According to what is illustrated in Figure 3, in order to simplify and reduce the cost of the electric machine 15, it is possible to insert between the hollow shaft 24 of the electric machine 15 and the secondary shaft 19 of the gear change 10 a coupling device 26 (typically a synchronizer), which is driven by the control unit 23 to engage or disengage the hollow shaft 24 of the electric machine 15 to/from the secondary shaft 19 of the gear change 10. In this way, the hollow shaft 24 of the electric machine 15 is kept idle (i.e., not connected to the secondary shaft 19) when the speeds of rotation of the secondary shaft 19 are not compatible with the maximum speed of rotation of the hollow shaft 24 of the electric machine 15. Hence, the mechanical sizing of the electric machine 15 is simplified in so far as the electric machine 15 does not necessarily have to work (or at least does not have to work for long periods) with all the possible r.p.m. of the secondary shaft 19. In use, the control unit 23 separates the hollow shaft 24 of the electric machine 15 from the secondary shaft 19 of the gear change 10 when the speed of the automobile 1 (i.e., the r.p.m. of the secondary shaft 19) exceeds a pre-set threshold (for example, in the region of 100-130 km/h). It should be noted that, when the speed of the automobile 1 exceeds 100-130 km/h, the electric machine 15 becomes substantially useless in so far as said speeds are normally only compatible when driving on a motorway, where the electric drive and the regenerative brake are never used.

As has been said previously, the coupling device 26 is also designed to maintain the hollow shaft 24 of the electric machine 15 idle (i.e., not connected to the secondary shaft 19). Said configuration is used when the electric machine 15 does not have to be used either as motor or as generator (for example, the automobile 1 is travelling at a constant cruising speed on the motorway, and the battery 17 is completely charged) and the aim is to prevent the hollow shaft 24 of the electric machine 15 from being driven in rotation (loadless rotation of the hollow shaft 24 of the electric machine 15 entails losses of mechanical energy both by friction and by ventilation). In addition, the hollow shaft 24 of the electric machine 15 is necessarily kept idle (i.e., not connected to the secondary shaft 19) when the speeds of rotation of the secondary shaft 19 are not compatible with the maximum speed of rotation of the hollow shaft 24 of the electric machine 15.

In the embodiments illustrated in Figures 2 and 3, the transmission ratio between the hollow shaft 24 of the electric machine 15 and the secondary shaft 19 of the gear change 10 is equal to 1 (i.e., the electric machine 15 directly meshes with the secondary shaft 19 without any gear reduction). This entails the need to use an electric machine 15 capable of developing/absorbing (according to whether it is made to operate as motor or as generator) a high mechanical torque. Consequently, the electric machine 15 has inevitably a large diameter and a contained length. The fact that the electric machine 15 has a large diameter and a contained length renders housing of the electric machine 15 more complex in so far as the space available tends to be long and narrow (i.e., of small diameter) rather than short and wide (i.e., of large diameter). In other words, there is a greater development of the space available in the axial than in the radial direction.

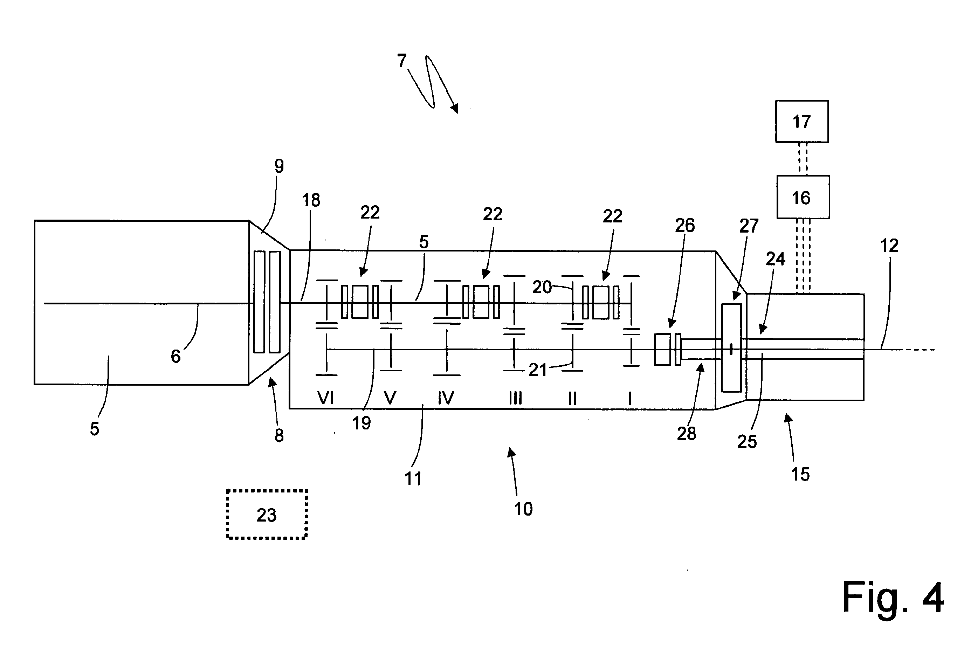

In order to be able to use an electric machine 15 having a contained diameter that is better suited to the conformation of the space available, it is necessary to have a reduction ratio between the hollow shaft 24 of the electric machine 15 and the secondary shaft 19 of the gear change 10 (i.e., the hollow shaft 24 has to turn more rapidly than the secondary shaft 19) in such a way that the electric machine 15 will be able to develop/absorb (according to whether it is made to operate as motor or as generator) a mechanical torque that is not particularly high. For this purpose, according to the embodiment illustrated in Figure 4, set upstream of the coupling device 26 is an epicyclic reducer 27 (or, alternatively, another type of reducer), which connects the hollow shaft 24 of the electric machine 15 to the secondary shaft 19 of the gear change 10 with a reduction ratio determined in such a way that the hollow shaft 24 will turn more rapidly than the secondary shaft 19. The epicyclic reducer 27 is also hollow to enable the transmission shaft 12 to pass though it. In particular, the hollow shaft 24 of the electric machine 15 is angularly fixed with respect to an input of the epicyclic reducer 27, whilst an output of the epicyclic reducer 27 is angularly fixed with respect to the secondary shaft 19 of the gear change 10 by means of interposition of the hollow connection shaft 28, which terminates in the coupling device 26. Also the connection shaft 28 must be hollow to enable passage inside it of the transmission shaft 12. Obviously, as an alternative to the epicyclic reducer 27, any other mechanical reducer could be used. An advantage of the epicyclic reducer 27 is that, since it has a perfect symmetry with respect to the axis of rotation, it is well suited to being centrally hollow to enable passage of the transmission shaft 12.

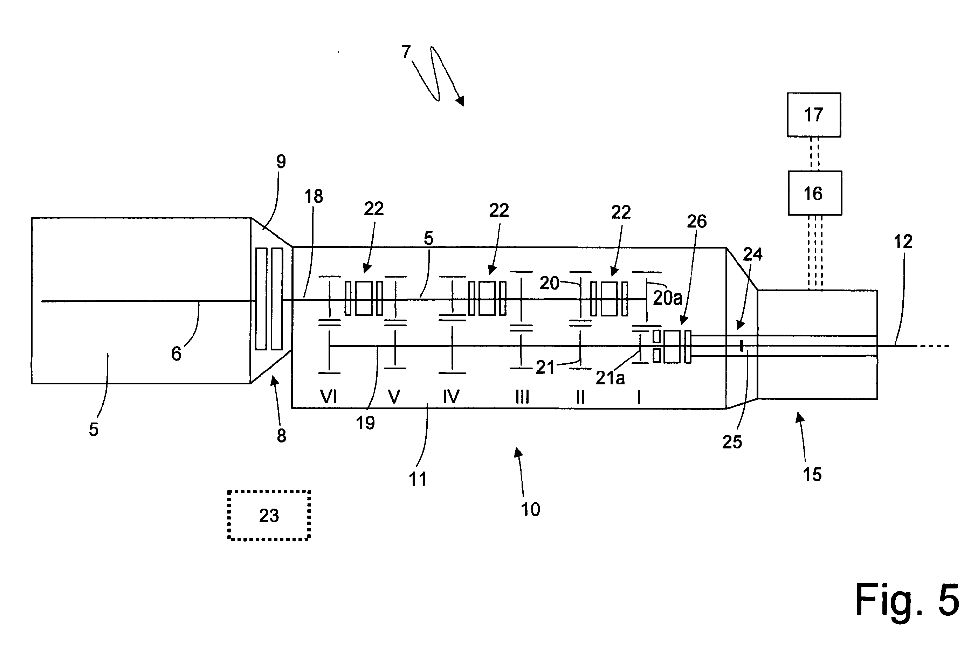

An alternative to the use of the epicyclic reducer 27 is illustrated in the embodiment of Figure 5, in which the output of the coupling device 26 is not directly connected to the secondary shaft 19, but meshes with a primary gear 20a, which is mounted idle on the primary shaft 18 and meshes always with a respective secondary gear 21a, which is angularly fixed with respect to the secondary shaft 19. In this way, when the coupling device 26 is meshing, the motion is not transmitted directly (i.e., in direct-drive meshing) between the hollow shaft 24 of the electric machine 15 and the secondary shaft 19 of the gear change 10, but is transmitted between the hollow shaft 24 of the electric machine 15 and the secondary shaft 19 of the gear change 10 through coupling of the primary gear 20a with the secondary gear 21a. In other words, when the hollow shaft 24 of the electric machine 15 is angularly fixed with respect to the primary gear 20a, the hollow shaft 24 of the electric machine 15 is also angularly fixed with respect to the secondary shaft 19 by the transmission ratio imposed by meshing between the primary gear 20a and the corresponding secondary gear 21a (hence the hollow shaft 24 turns faster than the secondary shaft 19). An advantage of the embodiment illustrated in Figure 5 is that two gear wheels already present in the gear change 10 are used (namely, the primary gear 20a and the secondary gear 21a that define one of the gear speeds of the gear change 10) and hence said solution is particularly simple, light and compact. As an alternative to using two gears (i.e., the primary gear 20a and the secondary gear 21a) already present in the gear change 10, two gears could be used which are not normally present in the gear change 10, do not define a gear speed of the gear change 10, and are added to the gear change 10 only for connection of the electric machine 15.

According to a variant of the embodiment of Figure 5, the coupling device 26 has three positions: an intermediate disengagement position, in which the hollow shaft 24 of the electric machine 15 is angularly isolated from the secondary shaft 19 of the gear change 10, a first engagement position, in which the hollow shaft 24 of the electric machine 15 is angularly fixed in direct-drive meshing with respect to the secondary shaft 19 of the gear change 10 (hence without any reduction ratio), and a second engagement position, in which the hollow shaft 24 of the electric machine 15 is angularly fixed with respect to a primary gear 20a, which is mounted idle on the primary shaft 18 and meshes always with a respective secondary gear 21a, which is angularly fixed with respect to the secondary shaft 19. Consequently, this variant enables the hollow shaft 24 of the electric machine 15 to be coupled to the secondary shaft 19 of the gear change 10 by means of two different transmission ratios A (in direct-drive meshing) and B (reduced).

In use, the control unit 23 sets the coupling device 26 in the first engagement position, in which the hollow shaft 24 of the electric machine 15 is angularly fixed in direct-drive meshing with respect to the secondary shaft 19 of the gear change 10 when the speed of the automobile 1 (i.e., the speed of rotation of the secondary shaft 19) is lower than a first threshold (for example, 40-60 km/h). Then the control unit 23 sets the coupling device 26 in the second engagement position, in which the hollow shaft 24 of the electric machine 15 is angularly fixed with respect to a primary gear 20a when the speed of the automobile 1 (i.e., the speed of rotation of the secondary shaft 19) is comprised between the first threshold (for example 40-60 km/h) and a second threshold (for example 100-130 km/h). Finally, the control unit 23 sets the coupling device 26 in the intermediate disengagement position, in which the hollow shaft 24 of the electric machine 15 is angularly isolated from the secondary shaft 19 of the gear change 10 when the speed of the automobile 1 (i.e., the speed of rotation of the secondary shaft 19) exceeds the second threshold (for example 100-130 km/h).

As an alternative to using speed thresholds to decide the type of coupling between the hollow shaft 24 of the electric machine 15 and the secondary shaft 19 of the gear change 10, it is possible to use the gear speed currently engaged; for example, the control unit 23 could set the coupling device 26 in the first engagement position, in which the hollow shaft 24 of the electric machine 15 is angularly fixed in direct-drive meshing with respect to the secondary shaft 19 of the gear change 10 when the first gear speed I or the second gear speed II are engaged. Then the control unit 23 could set the coupling device 26 in the second engagement position, in which the hollow shaft 24 of the electric machine 15 is angularly fixed with respect to a primary gear 20a when the third gear speed III or the fourth gear speed IV are engaged. Finally, the control unit 23 could set the coupling device 26 in the intermediate disengagement position, in which the hollow shaft 24 of the electric machine 15 is angularly isolated from the secondary shaft 19 of the gear change 10 when the fifth gear speed V or the sixth gear speed VI are engaged.

In the embodiments illustrated in the attached figures, the gear change 10 is a single-clutch gear change and is hence coupled to just one clutch 8 and is provided with just one primary shaft 18 and just one secondary shaft 19. According to a different embodiment (not illustrated but altogether equivalent), the gear change 10 is a double-clutch gear change and is hence coupled to two clutches 8 and is provided with two primary shafts 18 (each of which receives the motion from a respective clutch 8) and one or two secondary shafts 19. Also when the gear change 10 is a double-clutch gear change what has been described above with reference to the electric machine 15 remains substantially unchanged, and the hollow shaft 24 of the electric machine 15 is connected/connectable to the secondary shaft 19 or to one of the two secondary shafts 19 of the gear change 10.

Described hereinafter are some possible uses of the electric machine 15.

In the case where the automobile is slowing down, the electric machine 15 can function as generator, supplying electrical energy to the battery 17 to perform a regenerative braking (compatibly with the state of charge of the battery 17 and with the dynamics of the automobile 1) for recovering part of the kinetic energy possessed by the automobile.

In the case of marked acceleration of the automobile, the reversible electric machine 15 can function as electric motor, absorbing electrical energy from the battery 17 to supply a supplementary torque ("electrical boost").

In particular situations and for limited time intervals, the electric machine 15 can function as motor, absorbing electrical energy from the battery 17, whilst the thermal internal-combustion engine 5 is turned off, and the servo clutch 8 is open; in this situation, drive is purely electrical ("full-electric drive").

When travelling at very low speeds, the reversible electric machine 15 can function as motor, absorbing electrical energy from the battery 17, and in "crawling" mode (low-speed drive) to prevent excessive wear of the servo clutch 8. In other words, in order to simulate the behaviour of a traditional automatic transmission, when the foot is released from the brake pedal, the automobile is made to advance at a very low speed using only the torque generated by the electric machine 15, which is made to function as motor, absorbing electrical energy from the battery 17. In this way, it is not necessary to use the servo clutch 8 for transmitting the torque generated by the thermal internal-combustion engine 5, and hence high wear on the servo clutch 8 itself is avoided.

When the automobile 1 stops on a slope, the reversible electric machine 15 can operate as electromagnetic brake to keep the automobile braked, generating statically (i.e., without turning) a torque that balances the torque generated by the slope ("hill hold").

In the case of pick-up (starting from a stationary condition), the electric machine 15 can function as motor, absorbing electrical energy from the battery 17 to generate a torque that is added to the torque generated by the thermal internal-combustion engine 5 (which hence has to generate a lower torque) to prevent overheating of the clutch 8 ("boosted pick-up"). In other words, in the pick-up step, the internal-combustion engine 5 has to generate a lower torque in so far as there is present also a contribution of torque supplied by the electric machine 15. In this way, the clutch 8 during the step of closing has to transmit a lower torque and hence undergoes less wear.

When the internal-combustion engine 5 is cold, i.e., during heating of the internal-combustion engine 5, the latter is made to turn at an optimal and substantially constant r.p.m. to optimize heating, for example, minimizing the pollutant emissions during engine warm-up. The oscillations of the torque are compensated for by the electric machine 15, which can function as motor (when the torque generated by the internal-combustion engine 5 is insufficient) or else as generator (when the torque generated by the internal-combustion engine 5 is excessive).

The servo gear change 10 is without the gear for reverse (as appears evident from the attached figures), and the reverse motion is performed using only the electric machine 15, which is made to function as motor, absorbing electrical energy from the battery 17 ("R-gear removal"). In this mode of use, the secondary shaft 19 is uncoupled from the primary shaft 18 and/or the clutch 8 is kept open.

During a change of gear, the reversible electric machine 15 can be used for closing the torque drop to the rear drive wheels 3 that occurs during gear change following upon opening of the clutch 8. In this case, the electric machine 15 is governed so as to replace the thermal internal-combustion engine 5 when the clutch 8 remains open. Consequently, the reversible electric machine 15 can function as electric motor, absorbing energy from the battery 17 for generating a torque equivalent to the torque generated by the thermal internal-combustion engine 5 (automobile 1 in acceleration with the thermal internal-combustion engine 5 under load - gearing up), or else can function as electrical generator for applying to the secondary shaft 19 a braking torque equivalent to the engine brake of the thermal internal-combustion engine 5 (automobile 1 decelerating with the thermal internal-combustion engine 5 not under load - gearing down). It should be emphasized that, when the clutch 8 is opened, the reversible electric machine 15 is required to generate/absorb a mechanical torque that depends upon the desired law of motion of the automobile, said desired law of motion normally envisaging the absence of important discontinuities in the accelerations/decelerations.

Closing of the torque drop during a gear change from an old gear to a new gear envisages:
determining the acceleration of the automobile 1 with the old gear engaged;
determining the torque of the automobile 1 with the old gear engaged as a function of the acceleration of the automobile 1 with the old gear engaged;
determining the torque of the automobile 1 with the new gear engaged as a function of the torque of the automobile 1 with the old gear engaged and as a function of the variation of the transmission ratio between the old gear and the new gear;
generating a torque target, which envisages a torque equal to the torque of the automobile 1 with the old gear engaged at the instant of opening of the clutch 8, and a torque equal to the torque of the vehicle with the new gear engaged at the instant of closing of the clutch 8; and
driving the electric machine 15 as motor for pursuing the torque target between the instant of opening of the clutch 8 and the instant of closing of the clutch 8.

Obviously, the torque target is calculated so as not to present any discontinuity and thus smooth the passage between the torque of the automobile 1 with the old gear engaged and the torque of the automobile 1 with the new gear engaged.

To determine the torque of the automobile 1 as a function of the acceleration of the vehicle, an estimated value of the mass of the automobile 1 is used. Said estimated value of the mass of the automobile 1 is constantly updated by means of self-learning strategies, which in given moments compare the real acceleration/deceleration of the automobile 1 with the expected acceleration/deceleration of the automobile 1 (determined using the estimated value of the mass of the automobile 1). In the event of significant differences between the real acceleration/deceleration of the automobile 1 and the expected acceleration/deceleration of the automobile 1, said differences are attributed to a variation of the mass of the automobile 1 and are hence used for updating the estimated value of the mass of the automobile 1 (obviously taking care to verify that said differences are not be due to change of slope of the road). Updating of the estimated value of the mass of the automobile 1 could be carried out also using the data of the amount of fuel present in the tank, the data on the presence of a front passenger (normally available in so far as it is used by the control of the airbag of the front passenger), and possibly the data provided by sensors of the suspensions with vehicle standing still.

The servo transmission 7 described above presents numerous advantages, in so far as it is structurally altogether similar to a standard servo transmission and is hence simple and inexpensive to provide starting from an existing servo transmission. In addition, in the servo transmission 7 described above, the positioning of the electric machine 15 is relatively convenient also in an existing vehicle that has not been designed for hybrid drive. In particular, the embodiments illustrated in the attached figures are particularly suitable for vehicles with rear drive and front engine and gearbox (i.e., with thermal internal-combustion engine and gear change at the front and rear differential). In fact, in this type of automobile the electric machine 15 is positioned in the tunnel of the transmission in the proximity of the gear change 10 with a particularly simple layout and with minimum or no modifications to the body of the vehicle.

## Claims

1. A motor-drive transmission (7) comprising:
a mechanical gear change (10), which is provided with at least one primary shaft (18), which can be connected to the crankshaft (6) of a thermal internal-combustion engine (5), of at least one secondary shaft (19) connected to drive wheels (3), and with a plurality of gear pairs, each of which comprises a primary gear (20) mounted on the primary shaft (18) and a secondary gear (21) that is mounted on the secondary shaft (19) and meshes permanently with the primary gear (20);
at least one clutch (8) for connecting the primary shaft (18) of the servo gear change (10) to the crankshaft (6) of the thermal internal-combustion engine (5);
a transmission shaft (12), which is angularly fixed with respect to the secondary shaft (19) for connecting the secondary shaft (19) to the drive wheels (3); and an electric machine (15) provided with a shaft (24), which is coaxial to the secondary shaft (19) and can be connected to the secondary shaft (19) itself;
the servo transmission (7) is **characterized in that** the shaft (24) of the electric machine (15) is hollow, has inside an empty central channel (25), and is set coaxial to and around the transmission shaft (12) so as to house inside it the transmission shaft (12) itself.

2. The servo transmission (7) according to Claim 1, wherein the hollow shaft (24) of the electric machine (15) is permanently connected to the secondary shaft (19) of the gear change (10).

3. The servo transmission (7) according to Claim 1 and comprising a coupling device (26), which is set between the hollow shaft (24) of the electric machine (15) and the secondary shaft (19) and is designed to connect and disconnect the hollow shaft (24) of the electric machine (15) mechanically to the secondary shaft (19).

4. The servo transmission (7) according to any one of Claims 1 to 3 and comprising a reducer (27), which is set between the hollow shaft (24) of the electric machine (15) and the secondary shaft (19) and has a transmission ratio such that the hollow shaft (24) of the electric machine (15) turns faster than the secondary shaft (19).

5. The servo transmission (7) according to Claim 4, wherein the reducer (27) is an epicyclic reducer (27).

6. The servo transmission (7) according to Claim 4 or Claim 5, wherein the reducer (27) is hollow to enable passage therein of the transmission shaft (12).

7. The servo transmission (7) according to Claim 6, wherein the hollow shaft (24) of the electric machine (15) is angularly fixed with respect to an input of the reducer (27) whilst an output of the epicyclic reducer (27) is angularly fixed with respect to the secondary shaft (19) of the gear change (10) by means of interposition of a hollow connection shaft (28), which terminates in the coupling device (26); the connection shaft (28) is hollow for enabling the passage inside it of the transmission shaft (12).

8. The servo transmission (7) according to any one of Claims 1 to 3, wherein the hollow shaft (24) of the electric machine (15) meshes with a first primary gear (20a), which is mounted idle on the primary shaft (18) and meshes always with a respective first secondary gear (21a), which is angularly fixed with respect to the secondary shaft (19).

9. The servo transmission (7) according to Claim 8, wherein the first primary gear (20a) and the first secondary gear (21a) define one of the gear speeds of the gear change (10).

10. The servo transmission (7) according to Claim 1 and comprising a coupling device (26), which is set between the hollow shaft (24) of the electric machine (15) and the secondary shaft (19) and is designed to connect and disconnect mechanically the hollow shaft (24) of the electric machine (15) to/from the secondary shaft (19); the output of the coupling device (26) meshes with a first primary gear (20a), which is mounted idle on the primary shaft (18) and meshes always with a respective first secondary gear (21a), which is angularly fixed with respect to the secondary shaft (19).

11. The servo transmission (7) according to Claim 10, wherein the first primary gear (20a) and the first secondary gear (21a) define one of the gear speeds of the gear change (10).

12. The servo transmission (7) according to Claim 10 or 11, wherein the coupling device (26) has three positions: a disengagement position, in which the hollow shaft (24) of the electric machine (15) is angularly isolated from the secondary shaft (19); a first engagement position, in which the hollow shaft (24) of the electric machine (15) is angularly fixed in direct-drive meshing with respect to the secondary shaft (19); and a second engagement position, in which the hollow shaft (24) of the electric machine (15) is angularly fixed with respect to the first primary gear (20a).

13. A vehicle (1) comprising:
two front wheels (2);
two rear drive wheels (3);
a thermal internal-combustion engine (5), which is set in a front position and is provided with the crankshaft (6); and a servo transmission (7) according to any one of Claims 1 to 12.
